# EUROPEAN PATENT APPLICATION

(11) **EP 1 887 757 A1**
(43) Date of publication of application: **13.02.2008**
(21) Application number: 07112955.5
(22) Date of filing: 23.07.2007
(51) Int. Cl.: H04L 29/06

(54) **Call set-up method and server making use of such a method**

(30) Priority: 10.08.2006 FR 0653341
(71) Applicant: Alcatel Lucent, 75008 Paris (FR)
(72) Inventor: Rey, Jean-François, 29200, BREST (FR)
(74) Representative: Sciaux, Edmond

(57) **Abstract**

The present invention concerns a method of setting up a call between a calling terminal (102) and a called terminal (104) connected to a telecommunication network (100) via a calling server (106) or a called server (108), respectively, the calling server (106) and the called server (108) communicating with each other in accordance with a transmission protocol.

According to the invention, such a method is characterized in that it includes the following steps:
- the step (112) of the calling server (106) receiving a request (110) from the calling terminal, that request being intended for the called terminal and being incompatible with the transmission protocol,
-the step (114) of the called server (108) determining the address of the called terminal (104) according to a call protocol used by the calling terminal (102) and the called terminal (104),
- the step (116) of the calling server (106) sending the request to the called terminal (104) using the address determined in accordance with the call protocol.

## Description

The present invention concerns a method of setting up a call between two terminals via a telecommunication network, and a server making use of such a method.

In a telecommunication network, a call between two terminals is generally set up via at least two intermediate servers serving as relays between the two terminals.

For example, connecting two telephone terminals in a cable Public Switched Telephone Network (PSTN) relaying a call request from a calling terminal to a called terminal involves a calling sever connected to the calling terminal and a called server connected to the called terminal.

It is also known to use different communication protocols in a telecommunication network, namely:
- a protocol specific to setting up a call, i.e. to connecting the terminals. Two examples that may be cited are the Session Initiation Protocol (SIP) defined by the Internet Engineering Task Force (IETF) and the H.323 protocol defined by the International Telecommunications Union - Telecommunications (ITU-T).
- a protocol specific to transmission of the call as such. For example, the Real Time Protocol (RTP) and the Real Time Control Protocol (RTCP) are used for transmission of the call as such when the Internet Protocol (IP) is used to transport data.
- a protocol specific to transmission between servers, such as the QSIG (Q Signaling) protocol or the ISUP (ISDN User Part) protocol currently being standardized by international organizations such as the ETSI (European Telecommunications Standards Institute).

Also, a communication protocol can be customized with applications specific to a given use. For example, consider a first terminal connected to a retirement home and a second terminal connected to a hospital, these two terminals being connected in order to send health data for a person located in the retirement home to enable it to be analyzed by a qualified person in the hospital.

In this case, a call can be set up using a customized protocol, for example a protocol based on the standard SIP protocol into which an application specific to this particular healthcare use is incorporated.

The present invention is a result of the observation that a server of a telecommunication network may be confronted by a request sent by a calling terminal that it cannot progress because the request uses a communication protocol different from its protocol for transmission with other servers or because the request includes a customized application unknown to the server.

In either case, the server is forced to reject a call request that proves to be incompatible with its transmission protocol.

The document US 2006/0007954 describes a method for setting up a call between a terminal belonging to a network using the H.323 protocol and a terminal belonging to another network using the SIP protocol that uses an address translation table and updates that table periodically.

The document US 2002/027915 describes a method for setting up a call between two terminals in a network using the Internet Protocol that consists in:
- A calling server receiving a call set-up request message sent by a calling terminal and including a destination address that does not have the Internet address format.
- The calling server sending a domain name server a request for the Internet address of a destination server that corresponds to the destination address.
- The domain name server sending the calling server a response including an Internet address of a destination server that corresponds to the destination address and an indication of an application-specific protocol that is supported by that destination server.
- The calling server determining if that application-specific protocol is the SIP protocol and, if so, sending this Internet address of the destination server to the calling terminal or, if not, interrogating a location server to determine the address of a gateway capable of translating between the SIP protocol and the application-specific protocol.

The drawback of these known methods is that they are incompatible with telephone processing logic for call transfer, call routing or group call operations that call a terminal other than the requested terminal, as defined in the initial call set-up request. It is therefore not possible to define once and for all which terminal must actually be called if a call set-up request contains such a called terminal address. Consequently, the address of a called terminal cannot be resolved immediately using a directory containing static data, even if the data is updated periodically.

To address this problem, the present invention provides a method of setting up a call between a calling terminal and a called terminal connected to a telecommunication network via a calling server and a called server, respectively, the calling server and the called server communicating with each other in accordance with a transmission protocol, characterized in that it includes the following steps:
- the step of the calling server receiving a request sent by the calling terminal, that request requesting the setting up of a call with a requested terminal, the actual destination of that request being a called terminal, and that request being incompatible with the transmission protocol,
- the step of broadcasting in the network a message indicating that the calling server is requesting the setting up of a call with said requested terminal and indicating that the calling terminal supports such and such a call protocol,
- the step of the called server, to which the called terminal is connected, receiving this message, determining, in accordance with predetermined criteria, if a response must be made or not, and if so, determining an address of the called terminal compatible with a call protocol used by the calling terminal and the called terminal,
- the step of the called server sending the calling server said address compatible with a call protocol used by the calling terminal and the called terminal, and
- the step of the calling server sending a call set-up request to the called terminal via the called server using said address compatible with a call protocol used by the calling terminal and the called terminal.

In fact, thanks to the invention, a calling server uses a call protocol specific to the calling terminal or the called terminal to transmit a call request between them.

An increased number of requests can be sent over a telecommunication network implementing the invention, which increases the use of the network and the diversity of the applications that can be used via the network.

Similarly, the invention provides for developing specific applications based the transmission protocol used by the servers without requiring significant, and therefore costly, modification of the servers of the telecommunication network transmitting such applications.

In one embodiment, the method includes the step of making use of a gateway at each calling server or called server to communicate with the calling terminal or the called terminal in accordance with the call protocol.

Accordingly, the calling, respectively called, server can set up calls with the calling, respectively called, terminal directly via this gateway.

In one embodiment, the method includes the step of sending the request from the gateway of the calling server, enabling fast and simple transmission of the request.

In one embodiment, the method includes the step of relaying the request sent by the gateway of the calling server via the gateway of the called server, the latter providing a relay between the called terminal and the communication network.

In one embodiment, the method includes the step of using a transmission protocol for the servers that is compatible with the call protocol of the terminals, the request from the calling terminal including an application external to the call protocol and incompatible with the transmission protocol.

In this case, the method enables the terminals to make use of applications developed by customizing call protocols.

In one embodiment, the method includes the step of using a transmission protocol for the servers that is incompatible with the call protocol of the terminals, in which case the method nevertheless enables communication between terminals.

In one embodiment, the method uses at least one of the following protocols as the transmission protocol or the call protocol: SIP, H.323, QSIG or ISUP.

The invention also provides a server for setting up a call, via a telecommunication network, between a terminal connected to that server and another terminal connected to a like server, said server including means for communicating with other servers of the network in accordance with a transmission protocol, characterized in that:
- it includes means for, in the case where a terminal connected to this server calls another terminal:
   - receiving a request sent by a calling terminal, that request requesting to set up a call with a requested terminal, and that request having for its actual destination a called terminal,
   -- determining that the request is incompatible with the transmission protocol,
   -- then broadcasting a message in the network indicating that the calling terminal is requesting to set up a call with the requested terminal and indicating that the calling terminal supports such and such a call protocol,
   - then receiving from a called server to which the called terminal is connected an address of the called terminal compatible with a call protocol used by the calling terminal and the called terminal, and
   -- finally sending a call set-up request to the called terminal using the address received from a called server; and
- it includes means for, in the case where a terminal connected to this server is called by another, calling terminal:
   -- receiving a message indicating that the calling terminal is requesting to set up a call with a requested terminal, the final destination of that call being a called terminal that is connected to that server, and this message indicating that the calling terminal supports such and such a call protocol, and then determining, in accordance with predetermined criteria, if a response must be made or not, and if so, determining an address of the called terminal compatible with a call protocol used by the calling terminal and the called terminal,
   -- then sending the calling server said address compatible with a call protocol used by the calling terminal and the called terminal, and
   -- finally receiving a request to set up a call from the calling server to the called terminal sent by the calling server using said address compatible with a call protocol used by the calling terminal and the called terminal.

Thanks to a server according to the invention, a terminal can make use of new applications with the aid of a call protocol without requiring upgrading of the server.

In one embodiment, the server includes a gateway for communicating with the calling terminal or the called terminal in accordance with the call protocol, enabling a direct connection between the server and the terminals.

In one embodiment, the server includes means for sending the request from its gateway, thereby accelerating the connection of the terminals.

In one embodiment, the server includes means for sending the request from its gateway to the gateway of a called server connected to the called terminal.

In one embodiment, the server includes means for using a protocol for transmission with other servers compatible with the call protocol of the terminals and means for identifying in the request from the calling terminal an application external to the call protocol and incompatible with the transmission protocol.

Thanks to such a server, terminals can develop customized applications on the basis of a particular call protocol and set up a call using the customized protocol via this server.

In one embodiment, the server includes means for using a protocol for transmission with the servers that is incompatible with the call protocol of the terminals, in which case the number of call protocols used with the server is practically unlimited.

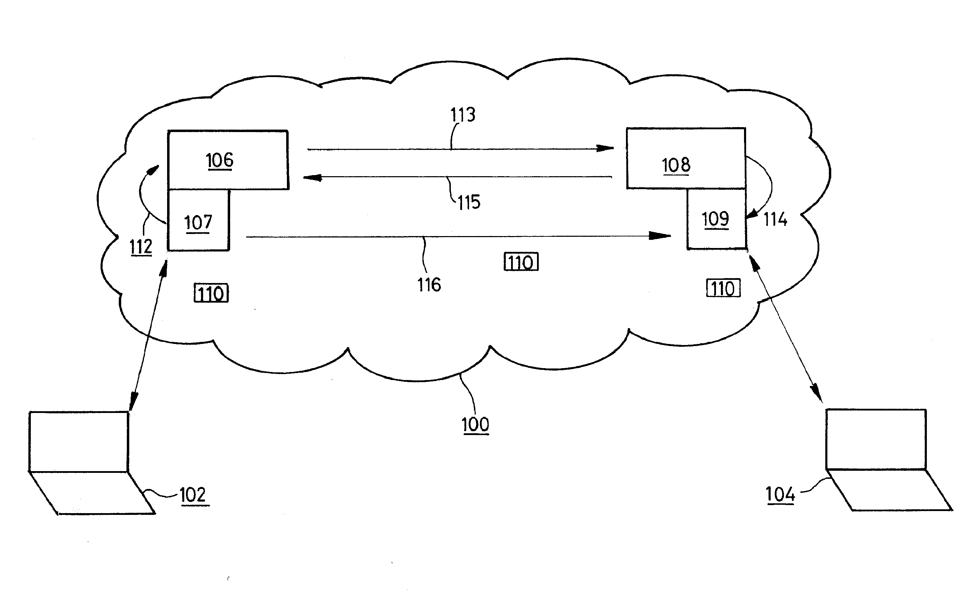

Other features and advantages of the invention will become apparent from the description of one embodiment of the invention given hereinafter by way of nonlimiting example and with reference to the appended single figure, which represents diagrammatically one embodiment of the method according to the invention used in a telecommunication network 100.

More precisely, the method sets up a call between a calling terminal 102 and a called terminal 104 via call servers 106 and 108 to enable transmission of information such as multimedia contents between the terminals 102 and 104.

A user requests call set-up by entering on the calling terminal 102 the number designating a requested terminal that belongs to a second user. A call is usually set up with a called terminal that is the requested terminal. However, if call transfer (or some other call rerouting function) is programmed for the requested terminal, then the call is set up to a called terminal that is not the requested terminal.

The "called server" is not known at the time of the call set-up request. The calling server 106 broadcasts to all the servers of the network 100 an information message indicating that the calling server 106 is requesting call set-up with the requested terminal and indicating that the calling terminal 102 supports such and such a call protocol and such and such functions. The servers of the network route this message to the server 106 to which the called terminal 104 is connected (which terminal may be different from the requested terminal, for example if the call transfer function is in effect). This server 108 to which the called terminal 104 is connected is referred to hereinafter as the called server.

The called server 108 then uses a call protocol that is supported by the calling terminal 102 and also by the called terminal 104. In this example, this is the SIP protocol. To this end, the servers 106 and 108 are provided with SIP gateways, or SIP interfaces, 107 and 109, respectively, for processing information received in accordance with the SIP protocol, in order to forward it in accordance with a transmission protocol appropriate to the connection between the servers 106 and 108, and vice-versa.

If this transmission protocol is identical to the call protocol and the terminal 102 broadcasts an information message indicating that the calling server 106 is requesting to set up a call with the requested terminal according to the call protocol (SIP), the calling server 106 can send this message to the called server 108 which in turn directs the message to the terminal 104.

However, if the terminal 102 broadcasts an information message indicating that the calling server 106 is requesting to set up a call with the requested terminal using a request according to a customized SIP protocol including an application 110 developed for a customized use, the server 106 recognizes during a step 112 that the application 110 is incompatible with its transmission protocol.

Such incompatibility is also revealed if the transmission protocol, for example a QSIG or ISUP transmission protocol, is different from the call protocol.

In this case, according to the invention, in a step 113, the server 106 broadcasts an information message indicating that the calling server 106 is requesting to set up a call with the requested terminal and indicating that the calling terminal 102 supports such and such a call protocol and potentially such and such functions.

During the step 114, the called server 108 receives this message and uses this information to make a decision as to its security, filtering, etc. policy. If it responds with an affirmative response, it supplies an address of the called terminal 104 or the address of an intermediate filter function for accessing the called terminal 104. That address is specific to the terminal 104 and compatible with a call protocol supported by the calling terminal 102 and also by the called terminal 104. That call protocol is the SIP protocol in this example.

For example, considering a network 100 in the form of an Internet network using the Internet Protocol (IP), this specific address can be a URL address of the terminal 104.

During the step 115, the called server 108 responds to the calling server 106 by sending this address of the called terminal 104.

During the step 116, using the address determined in this way, the server 106 can send a call set-up request to the called terminal 104. That request including the application 110, the latter can be interpreted by the terminal 104 that shares the call protocol of the terminal 102.

As shown in the appended figure, the calling server 106 then sends this call request to the second server 108 via their SIP interfaces 107 and 109, respectively. In this case, these servers 106 and 108 can send an unknown application 110 by considering it as a non-application-specific object.

Nevertheless, in a variant that is not shown, the server 106 can send this information directly to the terminal 104 via its gateway 107.

## Claims

1. Method of setting up a call between a calling terminal (102) and a called terminal (104) connected to a telecommunication network (100) via a calling server (106) and a called server (108), respectively, the calling server (106) and the called server (108) communicating with each other in accordance with a transmission protocol, **characterized in that** it includes the following steps:
- the step (112) of the calling server (106) receiving a request (110) sent by the calling terminal, that request requesting the setting up of a call with a requested terminal, the actual destination of that request being a called terminal (104), and that request being incompatible with the transmission protocol,
- the step (113) of broadcasting in the network a message indicating that the calling server (106) is requesting the setting up of a call with said requested terminal and indicating that the calling terminal (102) supports such and such a call protocol,
- the step (114) of the called server (108), to which the called terminal (104) is connected, receiving this message, determining, in accordance with predetermined criteria, if a response must be made or not, and if so, determining an address of the called terminal compatible with a call protocol used by the calling terminal (102) and the called terminal (104),
- the step (115) of the called server (108) sending the calling server (106) said address compatible with a call protocol used by the calling terminal (102) and the called terminal (104), and
- the step (116) of the calling server (106) sending a call set-up request to the called terminal (104) via the called server (108) using said address compatible with a call protocol used by the calling terminal (102) and the called terminal (104).

2. Method according to claim 1 including the step of making use of a gateway (107, 109) at each calling server (106) or called server (108) to communicate with the calling terminal (102) or the called terminal (106) in accordance with the call protocol.

3. Method according to claim 2 including the step of sending the request from the gateway of the calling server.

4. Method according to claim 3 including the step of relaying the request sent by the gateway of the calling server via the gateway of the called server.

5. Method according to claim 1, 2, 3 or 4 including the step of using a transmission protocol for the servers that is compatible with the call protocol of the terminals, the request from the calling terminal including an application external to the call protocol and incompatible with the transmission protocol.

6. Method according to claim 1, 2, 3 or 4 including the step of using a transmission protocol for the servers that is incompatible with the call protocol of the terminals.

7. Method according to any one of the preceding claims including the step of using at least one of the following protocols as the transmission protocol or the call protocol: SIP, H.323, QSIG or ISUP.

8. Server (106; 108) for setting up a call via a telecommunication network (100) between a terminal connected to that server and another terminal connected to a like server (108), said server (106) including means for communicating with other servers (108) of the network (100) in accordance with a transmission protocol, **characterized in that**:
- it includes means for, in the case where a terminal (102) connected to this server (case of the server 106) calls another terminal:
-- receiving a request (110) sent by a calling terminal (102), that request requesting to set up a call with a requested terminal, and that request having for its actual destination a called terminal (104),
-- determining (112) that the request is incompatible with the transmission protocol,
-- then broadcasting (113) a message in the network indicating that the calling terminal (102) is requesting to set up a call with the requested terminal and indicating that the calling terminal (102) supports such and such a call protocol,
-- then receiving (115) from a called server (108) to which the called terminal (104) is connected an address of the called terminal compatible with a call protocol used by the calling terminal (102) and the called terminal (104), and
-- finally sending (116) a call set-up request to the called terminal (104) using the address received from a called server (108); and
- it includes means for, in the case where a terminal (104) connected to this server (case of the server 108) is called by another, calling terminal (102):
-- receiving (114) a message indicating that the calling terminal (102) is requesting to set up a call with a requested terminal, the final destination of that call being a called terminal that is connected to that server, and this message indicating that the calling terminal (102) supports such and such a call protocol, and then determining, in accordance with predetermined criteria, if a response must be made or not, and if so, determining an address of the called terminal (104) compatible with a call protocol used by the calling terminal (102) and the called terminal (104),
-- then sending the calling server (106) said address compatible with a call protocol used by the calling terminal (102) and the called terminal (104), and
- - finally receiving (116) a request to set up a call from the calling server (106) to the called terminal (104) sent by the calling server (106) using said address compatible with a call protocol used by the calling terminal (102) and the called terminal (104).

9. Server according to claim 8 including a gateway (107) for communicating with the calling terminal (102) or the called terminal (106) in accordance with the call protocol.

10. Server according to claim 9 including means for sending the request from its gateway (107).

11. Server according to claim 10 including means for sending the request from its gateway to the gateway of a called server connected to the called terminal.

12. Server according to any one of claims 8 to 11 including means for using a protocol for transmission with other servers compatible with the call protocol of the terminals and means for identifying in the request from the calling terminal an application external to the call protocol and incompatible with the transmission protocol.

13. Server according to any one of claims 8 to 11 including means for making use of a transmission protocol with the servers that is incompatible with the call protocol of the terminals.
